# EUROPEAN PATENT APPLICATION

(11) **EP 4 253 351 A1**
(43) Date of publication of application: **04.10.2023**
(21) Application number: 23166005.1
(22) Date of filing: 31.03.2023
(51) Int. Cl.: C04B 41/89, F01D 5/28

(54) **ENVIRONMENTAL BARRIER COATING**

(30) Priority: 01.04.2022 US 202217711600
(71) Applicant: Raytheon Technologies Corporation, Farmington, CT 06032 (US)
(72) Inventor: JACKSON III, Richard Wesley, Mystic, 06355 (US); TANG, Xia, West Hartford, 06107 (US); BEALS, James T., West Hartford, 06107 (US)
(74) Representative: Dehns

(57) **Abstract**

A coating (116) according to an exemplary embodiment of this disclosure, among other possible things includes a bond coat (102) including gettering particles (108) and diffusive particles (110) dispersed in a matrix (106), a top coat (114) disposed over the bond coat (102), and an intermediate layer (118) between the bond coat (102) and the top coat (114). The intermediate layer (118) includes non-silicate oxide particles (120) dispersed in a matrix (106). An article (100) and a method of protecting a ceramic-based substrate (104) are also disclosed.

## Description

### BACKGROUND

A gas turbine engine typically includes a fan section, a compressor section, a combustoion section and a turbine section. Air entering the compressor section is compressed and delivered into the combustion section where it is mixed with fuel and ignited to generate a high-energy exhaust gas flow. The high-energy exhaust gas flow expands through the turbine section to drive the compressor and the fan section. The compressor section typically includes low and high pressure compressors, and the turbine section includes low and high pressure turbines.

This disclosure relates to composite articles, such as those used in gas turbine engines. Components, such as gas turbine engine components, may be subjected to high temperatures, corrosive and oxidative conditions, and elevated stress levels. In order to improve the thermal and/or oxidative stability, the component may include a protective barrier coating.

### SUMMARY

A coating according to an exemplary embodiment of this disclosure, among other possible things includes a bond coat including gettering particles and diffusive particles dispersed in a matrix, a top coat disposed over the bond coat, and an intermediate layer between the bond coat and the top coat. The intermediate layer includes non-silicate oxide particles dispersed in a matrix.

In a further example of the foregoing, the matrix of the intermediate layer is the same as the matrix of the bond coat.

In a further example of any of the foregoing, the non-silicate oxide particles comprise between about 25 and about 50 % by volume of the intermediate layer.

In a further example of any of the foregoing, the non-silicate oxide particles have an average diameter between about 10 and about 25 microns (about 0.5 to about 1 mils).

In a further example of any of the foregoing, the non-silicate oxide particles have an average diameter that is approximately the same as an average diameter of the gettering particles.

In a further example of any of the foregoing, the non-silicate oxide particles are hafnium dioxide particles.

In a further example of any of the foregoing, the top coat includes hafnium silicate.

In a further example of any of the foregoing, the gettering particles include molybdenum disilicide particles.

In a further example of any of the foregoing, the gettering particles further include silicon carbide particles and silicon oxycarbide particles.

In a further example of any of the foregoing, the intermediate layer includes particles of the material of the top coat.

In a further example of any of the foregoing, the intermediate layer includes regions of the material of the diffusive particles.

An article according to an exemplary embodiment of this disclosure, among other possible things includes a ceramic-based substrate and a coating disposed on the ceramic-based substrate. The coating includes a bond coat including gettering particles and diffusive particles dispersed in a matrix, a top coat disposed over the bond coat, and an intermediate layer between the bond coat and the top coat. The intermediate layer including non-silicate oxide particles dispersed in a matrix.

In a further example of the foregoing, the intermediate layer includes silicate reaction products.

In a further example of any of the foregoing, the silicate reaction products are the same material as the top coat.

In a further example of any of the foregoing, the intermediate layer includes regions of a material of the diffusive particles.

In a further example of any of the foregoing, the non-silicate oxide particles are hafnium dioxide and the topcoat and the silicate reaction products are hafnium silicate.

In a further example of any of the foregoing, the gettering particles include molybdenum disilicide particles.

A method of protecting a ceramic-based substrate according to an exemplary embodiment of this disclosure, among other possible things includes a bond coat including gettering particles and diffusive particles dispersed in a matrix, a top coat disposed over the bond coat, and an intermediate layer between the bond coat and the top coat. The intermediate layer includes non-silicate oxide particles dispersed in a matrix. The gettering particles are reactive with oxidants to form oxidation products. The non-silicate oxide particles are reactive with the oxidation products to form silicates in the intermediate layer.

In a further example of the foregoing, the non-silicate oxide particles are hafnium dioxide and the silicates are hafnium silicates.

In a further example of any of the foregoing, the gettering particles include molybdenum disilicide particles.

### BRIEF DESCRIPTION OF THE DRAWINGS

Figure 1 is a schematic view of an example gas turbine engine.
Figure 2 illustrates an article for the gas turbine engine of Figure 1 with a coating.

### DETAILED DESCRIPTION

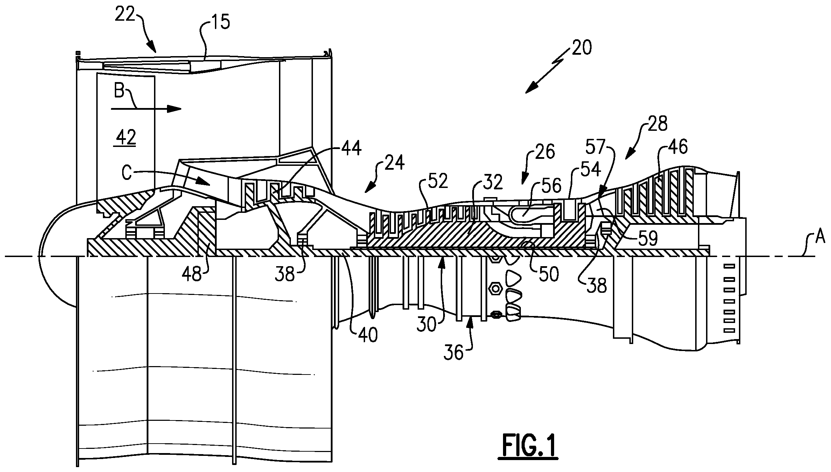

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a housing 15 such as a fan case or nacelle, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive a fan 42 at a lower speed than the low speed spool 30. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), and can be less than or equal to about 18.0, or more narrowly can be less than or equal to 16.0. The geared architecture 48 is an epicyclic gear train, such as a planetary gear system or other gear system, with a gear reduction ratio of greater than about 2.3. The gear reduction ratio may be less than or equal to 4.0. The low pressure turbine 46 has a pressure ratio that is greater than about five. The low pressure turbine pressure ratio can be less than or equal to 13.0, or more narrowly less than or equal to 12.0. In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to an inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1 and less than about 5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition - typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. The engine parameters described above and those in this paragraph are measured at this condition unless otherwise specified. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45, or more narrowly greater than or equal to 1.25. "Low corrected fan tip speed" is the actual fan tip speed in ft/sec divided by an industry standard temperature correction of [(Tram °R) / (518.7 °R)]^{0.5} (where °R=K x 9/5). The "Low corrected fan tip speed" as disclosed herein according to one non-limiting embodiment is less than about 1150.0 ft / second (350.5 meters/second), and can be greater than or equal to 1000.0 ft / second (304.8 meters/second).

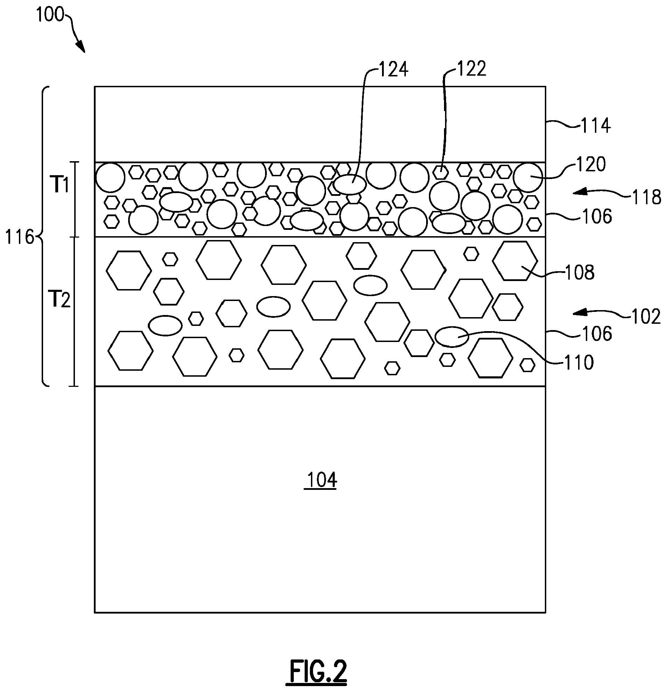

Figure 2 schematically illustrates a representative portion of an example article 100 for the gas turbine engine 20 that includes a composite material bond coat 102 that acts as a barrier layer. The article 100 can be, for example, an airfoil such as a blade or vane in the compressor section 24 or turbine section 28, a combustor liner panel in the combustor section 26, a blade outer air seal, or other component that would benefit from the examples herein. In this example, the bond coat 102 is used as an environmental barrier layer to protect an underlying substrate 104 from environmental conditions, as well as thermal conditions. As will be appreciated, the bond coat 102 can be used as a stand-alone barrier layer, as an outermost/top coat with additional underlying layers, or in combination with other coating under- or over-layers, such as, but not limited to, ceramic-based topcoats.

The bond coat 102 includes a matrix 106, a dispersion of "gettering" particles 108, and a dispersion of diffusive particles 110. The matrix 106 may be silicon dioxide (SiO₂), in one example. In one example, the gettering particles 108 are silicon oxycarbide particles (SiOC) or molybdenum disilicide (MoSi₂) particles 108, though other examples are contemplated. The gettering particles 108 could be, for instance, molybdenum disilicide particles, other silicides, silicon oxycarbide particles, silicon carbide (SiC) particles, silicon nitride (Si₃N₄) particles, silicon oxycarbonitride (SiOCN) particles, silicon aluminum oxynitride (SiAlON) particles, silicon boron oxycarbonitride (SiBOCN) particles, or combinations thereof. The diffusive particles 110 could be, for instance, barium magnesium alumino-silicate (BMAS) particles, barium strontium aluminum silicate particles, magnesium silicate particles, calcium aluminosilicate particles (CAS), alkaline earth aluminum silicate particles, yttrium aluminum silicate particles, ytterbium aluminum silicate particles, other rare earth metal aluminum silicate particles, borosilicate particles, or combinations thereof.

In a particular example, the gettering particles 108 include a combination of silicon carbide particles, silicon oxycarbide particles, and molybdenum disilicide particles. In this example, the bond coat 102 includes at least about 50% by volume of silicon carbide and silicon oxycarbide, together, before any oxidation of the gettering particles.

The bond coat 102 protects the underlying substrate 104 from oxygen and moisture. For example, the substrate 104 can be a ceramic-based substrate, such as a silicon-containing ceramic material. One example is silicon carbide. Another non-limiting example is silicon carbide fibers in a silicon carbide matrix. The gettering particles 108 and the diffusive particles 110 function as an oxygen and moisture diffusion barrier to limit the exposure of the underlying substrate 104 to oxygen and/or moisture from the surrounding environment. Without being bound by any particular theory, the diffusive particles 110, such as BMAS particles 110, enhance oxidation and moisture protection by diffusing to the outer surface of the barrier layer opposite of the substrate 104 and forming a sealing layer that seals the underlying substrate 104 from oxygen/moisture exposure. Additionally, cationic metal species of the diffusive particles 110 (for instance, for BMAS particles, barium, magnesium, and aluminum) can diffuse into the gettering particles 108 to enhance oxidation stability of the gettering material. Further, the diffusion behavior of the diffusive particles 110 may operate to seal any microcracks that could form in the barrier layer. Sealing the micro-cracks could prevent oxygen from infiltrating the barrier layer, which further enhances the oxidation resistance of the barrier layer. The gettering particles 108 can react with oxidant species, such as oxygen or water that could diffuse into the bond coat 102. In this way, the gettering particles could reduce the likelihood of those oxidant species reaching and oxidizing the substrate 104.

A ceramic-based top coat 114 is interfaced with the bond coat 102. As an example, the ceramic-based top coat 114 can include one or more layers of an oxide-based material. The oxide-based material can be, for instance, hafnium-based oxides or yttrium-based oxides (such as hafnia, hafnium silicate, yttrium silicate, yttria stabilized zirconia or gadolinia stabilized zirconia), or combinations thereof, but is not limited to such oxides.

The top coat 114 and bond coat 102 together form a barrier coating 116 for the substrate 104.

As the gettering particles 108 react with oxidants in the protective mechanism discussed above, the oxidation products of the gettering particles 108 accumulate in the bond coat 102. The reaction products accumulate primarily between at the outermost surface of the bond coat 102 near the top coat 114. For instance, the reaction products could be or include silicon dioxide. However, the silicon dioxide may have an undesirable microstructure due in part to the high temperatures at which the oxidation reactions occur, for instance, during the operation of the gas turbine engine 20 which contains the article 100. In a particular example, the silicon dioxide is in a cristobalite phase, which is relatively unstable and exhibits decreased mechanical properties as compared to the matrix 106. The cristobalite phase forms in planar layers and is susceptible to cracking. Accumulation of these oxidation products in the coating 116 may therefore debit the protective properties and mechanical integrity of the coating 116.

In order to mitigate the effects of the reaction products, an intermediate layer 118 is provided in the coating 116 between the top coat 114 and the bond coat 102. The intermediate layer 118 comprises the matrix 106 loaded with non-silicate oxide particles 120 such as hafnium dioxide, zirconium dioxide, titanium dioxide, or other rare earth metal non-silicate oxides. The non-silicate oxide particles 120 consume the oxide reaction products from gettering particle 108 oxidation discussed above by reacting with the silicon-containing oxide reaction products to form silicates. Therefore, the non-silicate oxide particles 120 discourage the formation of large pockets of undesirable oxide phases as discussed above, minimizing opportunities for cracking and thereby improve the effectiveness and integrity of the coating 116. Moreover, the silicates have relatively low thermal conductivity and are generally crystalline, and therefore may provide thermal protection to and improve the mechanical stability of the coating 116.

The intermediate layer 118 has a thickness T1 and the bond coat 102 has a thickness T2. In some examples, the ratio of the thicknesses T2 to T1 is at least about 3. In a particular example, the ratio is between about 3 and about 4. For instance, the thickness T1 is about 50 microns (2 mils) and the thickness T2 is between about 150 and about 200 microns (about 6 and about 8 mils).

During the article 100 lifetime, various components of the top coat 114 and/or bond coat 102 may diffuse within the coating 116. For instance, the top coat 114 material may diffuse in to the intermediate layer 118 and/or constituents of the coating 102 may diffuse into the intermediate layer 118. Accordingly, the intermediate layer 118 may include particles 122 of top coat 114 material. The intermediate layer 118 may also include amorphous regions 124 of diffusive particle 110 materials and/or boron silicate glasses.

In other examples, the intermediate layer 118 could be formed to include particles of the top coat 114 material and/or diffusive particle 110 material.

In some particular examples, the silicate products of the reaction between the non-silicate oxide particles 120 and reaction products of the oxidation of gettering particles 108 is the same material as the material of the top coat 114. For instance, the top coat 114 is hafnium silicate and the non-silicate oxide particles 120 are hafnium dioxide. The hafnium dioxide reacts with silicon-containing reaction products of the oxidation of gettering particles 108 to form hafnium silicate.

In general, the larger the surface area of the non-silicate oxide particles 120, the more reactions involving the non-silicate oxide particles 120 are encouraged. Accordingly, the size of the non-silicate oxide particles 120 is selected to provide the desired reaction kinetics to consume the undesirable phases discussed above and improve the properties of the coating 116. The non-silicate oxide particles 120 may have an average diameter between about 10 and about 25 microns (about 0.5 to about 1 mils), in some examples. In some particular examples, the non-silicate oxide particles 120 have approximately the same average diameter as an average diameter of the gettering particles 108 prior to the gettering particles 108 reacting with any oxidants.

The non-silicate oxide particles 120 may comprise between about 25 and about 50 % by volume of the intermediate layer 118 before reacting with other constituents of the coating 116 as described above. The amount of the non-silicate oxide particles 120 in the intermediate layer is balanced with the size of the non-silicate oxide particles 120 in consideration with the desired thermal and mechanical properties of the coating 116 and the desired reaction kinetics discussed above.

In a particular example, the gettering particles 108 include molybdenum disilicide particles. The non-silicate oxide particles 120 are hafnium dioxide particles. The top coat 114 is hafnium silicate.

The coating 116 can be applied to the component 100 by any known method, such as slurry based methods. For instance, a slurry containing bond coat 102 constituents can be applied to the component 100 and then cured or otherwise set by any known method such as heat treatment. Similar slurry application and curing/setting methods can be repeated for intermediate layer 118. The top coat 114 can be applied by similar methods or other methods known in the art such as spray coating.

As used herein, the term "about" has the typical meaning in the art, however in a particular example "about" can mean deviations of up to 10% of the values described herein.

Although the different examples are illustrated as having specific components, the examples of this disclosure are not limited to those particular combinations. It is possible to use some of the components or features from any of the embodiments in combination with features or components from any of the other embodiments.

The foregoing description shall be interpreted as illustrative and not in any limiting sense. A worker of ordinary skill in the art would understand that certain modifications could come within the scope of this disclosure. For these reasons, the following claims should be studied to determine the true scope and content of this disclosure.

## Claims

1. A coating (116), comprising:
a bond coat (102) including gettering particles (108) and diffusive particles (110) dispersed in a matrix (106);
a top coat (114) disposed over the bond coat (102); and
an intermediate layer (118) between the bond coat (102) and the top coat (114), the intermediate layer (118) including non-silicate oxide particles (120) dispersed in a matrix (106).

2. The coating (116) as recited in claim 1, wherein the matrix (106) of the intermediate layer (118) is the same as the matrix (106) of the bond coat (102).

3. The coating (116) as recited in claim 1 or 2, wherein the non-silicate oxide particles (120) comprise between about 25 and about 50 % by volume of the intermediate layer (118).

4. The coating (116) as recited in claim 1, 2 or 3, wherein the non-silicate oxide particles (120) have an average diameter between about 10 and about 25 microns (about 0.5 to about 1 mils).

5. The coating (116) as recited in any preceding claim, wherein the non-silicate oxide particles (120) have an average diameter that is approximately the same as an average diameter of the gettering particles (108).

6. The coating (116) as recited in any preceding claim, wherein the non-silicate oxide particles (120) are hafnium dioxide particles.

7. The coating (116) as recited in any preceding claim, wherein the top coat (114) includes hafnium silicate.

8. The coating (116) as recited in any preceding claim, wherein the gettering particles (108) further include silicon carbide particles and silicon oxycarbide particles.

9. The coating (116) as recited in any preceding claim, wherein the intermediate layer (118) includes particles (122) of the material of the top coat (114).

10. The coating (116) as recited in any preceding claim, wherein the intermediate layer (118) includes regions (124) of the material of the diffusive particles (110).

11. An article (100), comprising:
a ceramic-based substrate (104); and
the coating (116) of any preceding claim disposed on the ceramic-based substrate (104).

12. The article (100) of claim 11, wherein the intermediate layer (118) includes silicate reaction products, and, optionally:
the silicate reaction products are the same material as the top coat (114);
and/or
the non-silicate oxide particles (120) are hafnium dioxide and the topcoat (114) and the silicate reaction products are hafnium silicate.

13. A method of protecting a ceramic-based substrate (104), comprising:
providing a coating (116) on the ceramic-based substrate (104), the coating including:
a bond coat (102) including gettering particles (108) and diffusive particles (110) dispersed in a matrix (106),
a top coat (114) disposed over the bond coat (102), and
an intermediate layer (118) between the bond coat (102) and the top coat (114), the intermediate layer (118) including non-silicate oxide particles (120) dispersed in a matrix (106);
wherein the gettering particles (108) are reactive with oxidants to form oxidation products, and wherein the non-silicate oxide particles (120) are reactive with the oxidation products to form silicates in the intermediate layer (118).

14. The method of claim 13, wherein the non-silicate oxide particles (120) are hafnium dioxide and the silicates are hafnium silicates.

15. The coating (116), article (100) or method of any preceding claim, wherein the gettering particles (108) include molybdenum disilicide particles.
